# EUROPÄISCHE PATENTSCHRIFT

(11) **EP 2 556 114 B1**
(45) Veröffentlichungstag und Bekanntmachung des Hinweises auf die Patenterteilung: **16.07.2014**
(21) Anmeldenummer: 11712250.7
(22) Anmeldetag: 04.04.2011
(51) Int. Cl.: C08L 69/00

(54) **FLAMMGESCHÜTZTE POLYCARBONAT-ZUSAMMENSETZUNGEN**
FLAME-PROTECTED POLYCARBONATE COMPOSITIONS
COMPOSITIONS DE POLYCARBONATE IGNIFUGÉES

(30) Priorität: 07.04.2010 DE 102010013991
(43) Veröffentlichungstag der Anmeldung: 13.02.2013
(73) Patentinhaber: Bayer Intellectual Property GmbH, 40789 Monheim (DE)
(72) Erfinder: FELDERMANN, Achim, 40597 Düsseldorf (DE); WITTMANN, Dieter, 51375 Leverkusen (DE)
(74) Vertreter: BIP Patents
(86) Internationale Anmeldenummer: PCT/EP2011/055155
(87) Internationale Veröffentlichungsnummer: WO 2011/124540

(56) Entgegenhaltungen:
- EP-A1- 1 792 941
- DE-A1-102007 061 760
- US-A1- 2009 209 695

## Beschreibung

Die vorliegende Erfindung betrifft flammgeschützte, schlagzähmodifizierte Polycarbonat/Polymilchsäure-Zusammensetzungen, die ein Salz einer Phosphinsäure enthalten und eine verbesserte Wärmeformbeständigkeit, Zähigkeit und Flammwidrigkeit aufweisen, sowie die Verwendung der flammgeschützten schlagzähmodifizierten Polycarbonat/Polymilchsäure-Zusammensetzungen zur Herstellung von Formkörpern und die Formkörper selbst.

WO-A 2006/030951 A1 offenbart Zusammensetzungen enthaltend 95 - 5 Gew.-% Polymilchsäure (PLA) und 5 - 95 Gew.-% aromatisches Polycarbonat, jeweils bezogen auf die Summe der beiden Komponenten, ein Acrylharz oder ein Styrol-gepfropftes Arcrylharz, ein weiteres, mit einer Glycidylkomponente gepfropftes oder copolymerisiertes Polymer und mindestens einen Kompatibilitätsvermittler aus der Gruppe der Oxazoline, Oxazine und Carbodiimide.

DE-A 10 2007 061 760 offenbart schlagzähmodifizierte Polyalkylenterephthalat/Polycarbonat-Zusammensetzungen, welche ein Salz einer Phosphinsäure enthalten, die Verwendung der schlagzähmodifizierten Pulyalkylenterephthalat/Polycarbonat-Zusammensetzungen zur Herstellung von Formkörpern und die Formkörper selbst.

Während Kunststoffe zunehmend Metalle und Holz in vielen Bereichen der Technik und des täglichen Lebens ersetzten und intensiv an der Verbesserung ihrer Eigenschaften sowie an der Erschließung neuer Anwendungsgebiete gearbeitet wird, basiert ein großer Teil dieser Kunststoffe aber auf nicht nachwachsenden Rohstoffen, wie Erdöl, deren Vorräte begrenzt sind.
In den vergangen Jahren wurden daher einerseits Verfahren zum Recycling von Kunststoffen, andererseits Kunststoffe auf Basis nachwachsender Rohstoffe, z.B. Polymilchsäure (PLA) entwickelt. Ein Problem hierbei ist jedoch, dass diese Kunststoffe oftmals noch nicht die Spezifikationen und Eigenschaften der etablierten Materialien erreichen.

So ist beispielsweise bekannt, dass sich bei PC/PLA (Polycarbonat/Polymilchsäure) Blends eine verbesserte Flammwidrigkeit durch Zugabe phosphathaltiger Flammschutzmittel erreichen lässt. Diese flammgeschützten Blends weisen jedoch in der Regel eine geringe Wärmeformbeständigkeit und eine verminderte Zähigkeit auf, die für die gewünschten Anwendungsbereiche unzureichend ist.

Aufgabe der vorliegenden Erfindung ist daher die Bereitstellung von schlagzähmodifizierten Polycarbonat/Polymilchsäure-Zusammensetzungen mit einer optimalen Kombination aus gutem Flammschutz bei gleichzeitig hoher Wärmeformbeständigkeit und exzellenten mechanischen Eigenschaften, insbesondere hoher Spannungsrissbeständigkeit und Kerbschlagzähigkeit.

Es wurde nun überraschend gefunden, dass die Zusammensetzungen bzw. Formmassen enthaltend A) Polycarbonat, B) Polymilchsäure, C) kautschukmodifiziertes Pfropfpolymerisat und D) ein Salz einer Phosphinsäure, insbesondere Calciumphosphinat, als Flammschutzmittel zu Blends mit deutlich verbesserten Flammschutzeigenschaften, hoher Wärmeformbeständigkeit, hoher Spannungsrissbeständigkeit und hoher Kerbschlagzähigkeit führen.

Die Zusammensetzungen der vorliegenden Erfindung enthalten
A) 40 bis 90 Gew.-Teile, vorzugsweise 50 bis 75 Gew.-Teile, besonders bevorzugt 54 bis 72 Gew.-Teile (jeweils bezogen auf die Summe der Gewichtsteile der Komponenten A+B+C+D) aromatisches Polycarbonat,
B) 1 bis 40 Gew.-Teile, vorzugsweise 5 bis 30,0 Gew.-Teile, weiter bevorzugt 10 bis 28 Gew.-Teile, und besonders bevorzugt 15 bis 25 Gew.-Teile, (jeweils bezogen auf die Summe der Gewichtsteile der Komponenten A+B+C+D) Polymilchsäure,
C) 0,5 bis 15 Gew.-Teile, bevorzugt 3 bis 11 Gew.-Teile, besonders bevorzugt 5 bis 9 Gew.-Teile (jeweils bezogen auf die Summe der Gewichtsteile der Komponenten A+B+C+D) Pfropfpolymerisat,
D) 2 bis 25 Gew.-Teile, bevorzugt 5,0 bis 17,5 Gew.-Teile, besonders bevorzugt 7,5 bis 15 Gew.-Teile (jeweils bezogen auf die Summe der Gewichtsteile der Komponenten A+B+C+D) eines Salzes einer Phosphinsäure,
E) 0 bis 10 Gew.-Teile, bevorzugt 0,5 bis 5 Gew.-Teile (bezogen auf die Summe der Gewichtsteile der Komponenten A+B+C+D = 100) Vinyl(Co)Polymerisat,
F) 0 bis 50 Gew.-Teile, bevorzugt 0,5 bis 25,0 Gew.-Teile , besonders bevorzugt 0,7 bis 5,0 (jeweils bezogen auf die Summe der Gewichtsteile der Komponenten A+B+C+D = 100) Zusatzstoffe,
wobei alle Gewichtsteilangaben in der vorliegenden Anmeldung so normiert sind, dass die Summe der Gewichtsteile der Komponenten A+B+C+D in der Zusammensetzung 100 ergeben.

### Komponente A

Als Komponente A) enthalten die erfindungsgemäßen Zusammensetzungen ein Polycarbonat oder eine Mischung von Polycarbonaten.

Bevorzugte Polycarbonate sind solche Homopolycarbonate und Copolycarbonate auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Bevorzugt sind Bisphenole der Formel (Ia) 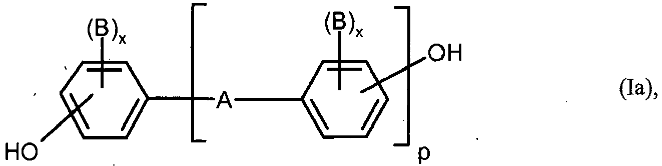 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können, oder ein Rest der Formel (II) oder (III) 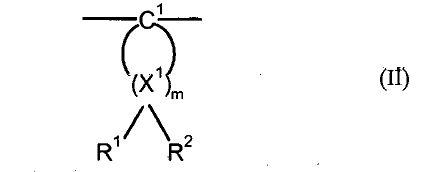 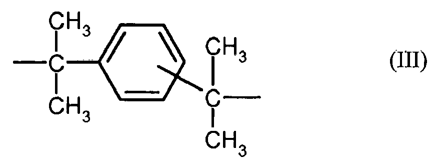
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R²: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cyclo-alkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern JP-A 62039 1986, JP-A 62040 1986 und JP-A 105550 1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beispielsweise beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse (M̅_{w}), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α"-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycarbonate im Sinne der Erfindung sind insbesondere Polydiorganosiloxan-Polycarbonat-Blockcopolymere, deren Gewichtsmittel der molaren Masse (M̅_{w}) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxyendgruppenhaltigen Polydiorganosiloxanen mit einem mittleren Polymerisationsgrad von bevorzugt Pₙ = 5 bis 100, besonders bevorzugt Pₙ = 20 bis 80, hergestellt werden.

Den Polycarbonaten könne übliche Additive wie z.B. Entformungsmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

### Komponente B

Als Komponente B wird Polymilchsäure eingesetzt. Die Komponente B kann dabei Polymilchsäure bestehend aus L-Milchsäure-Monomeren, D-Milchsäure-Monomeren oder Mischungen daraus enthalten, wobei die Mischungsverhältnisse von D- oder L- Milchsäure mit dem optischen Antipoden zwischen 95:5 bis 50 : 50 liegen.

Polymilchsäuren im Sinne der vorliegenden Erfindung sind ferner Polymere hergestellt aus Milchsäure und/oder Lactid und mindestens einer weiteren Hydroxycarbonsäure, ausgewählt aus der Gruppe, die Glycolsäure, Hydroxybuttersäure, Hydroxyvaleriansäure, Hydroxypentansäure, Hydroxycapronsäure und Hydroxyheptansäure, jeweils auch in enantiomerenreiner Form oder als Enantionmerengemisch, und deren Gemische umfaßt. Insbesondere werden Glycolsäure, 3-Hydroxymilchsäure, 4-Hydroxybutansäure, 3-Hydroxyvaleriansäure oder 6-Hydroxycapronsäure verwendet.

Der Gehalt an Milchsäure in den Gemischen beträgt vorzugsweise mindestens 50 Gew.-%, weiter bevorzugt mindestens 80 Gew.-%.

Vorzugsweise hat die Komponente B eine Glasübergangstemperatur von 60 °C und einen Schmelzpunkt von 178 °C.

Die Bestimmung der Glasübergangstemperatur erfolgt nach DIN 53765 bei einer Heizrate von 20 K mit Stickstoffschutzgas, wobei die Glasübergangstemperatur als Schnittpunkt der Mittellinie zwischen den extrapolierten Basislinien vor und nach dem Glasübergang der Meßkurve bestimmt wird.

Die Schmelze-Masse-Fließrate der Komponente B ist vorzugsweise im Bereich von 1 bis 50 g/10min, weiter bevorzugt von 2 - 25 g/10 min, besonders bevorzugt 5 - 20 g/10min, jeweils bei 210 °C und 2,16 kg Belastung.

Die spezifische Dichte der Komponente B ist vorzugsweise im Bereich von 1,2 - 1,3 g/cm³, besonders bevorzugt 1,24 - 1.25 g/cm³.

Das gewichtsgemittelte Molekulargewicht M_{w} der Komponente B (ermittelt durch Gelpermeationschromatographie mit Polystyrol-Standard) beträgt vorzugsweise 10.000 bis 1.500.000, weiter bevorzugt 15.000 bis 150.000, noch weiter bevorzugt 40.000 bis 120.000 und besonders bevorzugt 80.000 bis 100.000.

### Komponente C

Die Komponente C umfasst ein oder mehrere Pfropfpolymerisate von
C.1 5 bis 95, vorzugsweise 30 bis 90 Gew.-%, wenigstens eines Vinylmonomeren auf
C.2 95 bis 5, vorzugsweise 70 bis 10 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylcetat-Kautschuke.

Die Pfropfgrundlage C.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere C. 1 sind vorzugsweise Gemische aus
C.1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-(C₁-C₈)-Alkylester, wie Methyl(meth)acrylat, Ethyl(meth)acrylat, und
C.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-PhenylMaleinimid.

Bevorzugte Monomere C.1.1 sind ausgewählt aus mindestens einem der Monomere Styrol, α-Methylstyrol und Methylmethacrylat, bevorzugte Monomere C.1.2 sind ausgewählt aus mindestens einem der Monomere Acrylnitril, Maleinsäureanhydrid und Methylmethacrylat.

Die Kennzeichnung des Bestandteils "(Meth)" in Klammern bei Acrylaten bedeutet das optionale Vorhandensein dieses Bestandteils.

Bevorzugte Pfropfgrundlagen C.2 sind Silikonacrylatkautschuke, Dienkautschuke (beispielsweise auf Basis Butadien und Isopren) oder Gemische von Dienkautschuken. Unter Dienkautschuk im erfindungsgemäßen Sinne sind auch Copolymerisate von Dienkautschuken oder deren Gemischen mit weiteren copolymerisierbaren Monomeren (z.B. gemäß C.1.1 und C.1.2) zu verstehen.

Die Pfropfgrundlagen C.2 weisen im allgemeinen eine Glasübergangstemperatur von < 10°C, vorzugsweise < 0°C, besonders bevorzugt < -10°C auf.

In einer besonders bevorzugten Ausführungsform ist das Monomer C.1 Polymethylmethacrylat (PMMA), wobei weiter bevorzugt die Pfropfgrundlage C.2 ein Silikonacrylatkautschuk ist.

Besonders bevorzugte Polymerisate C sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Der Gelanteil der Pfropfgrundlage C.2 beträgt bevorzugt mindestens 20 Gew.-%, im Falle von im Emulsionspolymerisation hergestellten Pfropfgrundlagen C.2 vorzugsweise mindestens 40 Gew.-% (in Toluol gemessen).

Vorzugsweise weist das Pfropfpolymerisat aus den Komponenten C.1 und C.2 eine Kern-Schale-Struktur auf, wobei die Komponente C.1 die Schale bildet (auch als Hülle bezeichnet) und die Komponente C.2 den Kern ausbildet (siehe bspw. Ullmann's Encyclopedia of Industrial Chemistry, VCH-Verlag, Vol. A21, 1992, Seite 635 und Seite 656.

Die Pfropfcopolymerisate C werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß C.2 der Polymerisate C sind vorzugsweise Polymerisate aus Acrylsäurealkylestern, gegebenenfalls mit bis zu 40 Gew.-%, bezogen auf C.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage C.2. Bei cyclischen vernetzenden Monomeren mit mindestens drei ethylenisch ungesättigten Gruppen ist es vorteilhaft, die Menge auf unter 1 Gew.-% der Pfropfgrundlage C.2 zu beschränken.

Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage C.2 sind Emulsionspolymerisate, die einen Gelgehalt von mindestens 60 Gew.-% aufweisen.

Geeignete Silikonkautschuke gemäß C.2. können durch Emulsionspolymerisation hergestellt werden, wie beispielsweise in US 2891920 und US 3294725 beschrieben. Weitere geeignete Pfropfgrundlagen gemäß C.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlagen C.2 sind erfindungsgemäß auch Silikonacrylat-Kautschuke geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen. Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigkeit der fertigen Harzzusammensetzung nachteilig beeinflusst).Silikonacrylat-Kautschuke sind bekannt und beispielsweise beschrieben in US 5,807,914, EP 430134 und US 4888388. Vorzugsweise eingesetzt wird ein in Emulsionspolymerisation hergestelltes Pfropfpolymer mit C.1 Methylmetacrylat und C.2 Silikonacrylat-Komposit-Kautschuk.
Der Gelgehalt der Pfropfgrundlage C.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente D

Unter dem Salz einer Phosphinsäure (Komponente D) im erfindungsgemäßen Sinne sind das Salz einer Phosphinsäure mit einem beliebigen Metallkation zu verstehen. Es können auch Mischungen von Salzen eingesetzt werden, die sich in Ihrem Metallkation unterscheiden. Bei den Metallkationen handelt es sich um die Kationen Metalle der 1. Hauptgruppe (Alkalimetalle, vorzugsweise Li⁺, Na⁺, K⁺), der 2. Hauptgruppe (Erdalkalimetalle; vorzugsweise Mg²⁺, Ca²⁺, Sr²⁺, Ba²⁺, besonders bevorzugt Ca²⁺) oder der 3. Hauptgruppe (Elemente der Borgruppe; vorzugsweise Al³⁺) und/oder der 2., 7. oder 8. Nebengruppe (vorzugsweise Zn²⁺, Mn²⁺, Fe²⁺, Fe³⁺) des Periodensystems ist.

Vorzugsweise wird ein Salz oder eine Mischung von Salzen einer Phosphinsäure der Formel (IV) eingesetzt, 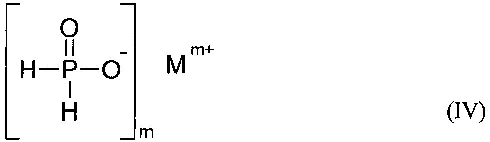 worin M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (IV)
für m = 1 die Metallkationen M⁺= Li⁺, Na⁺, K⁺,
für m = 2 die Metallkationen M²⁺ = Mg²⁺, Ca²⁺, Sr²⁺, Ba²⁺ und
für m = 3 die Metallkationen M³⁺ = Al³⁺,
höchst bevorzugt ist Ca²⁺ (m = 2).

In einer bevorzugten Ausführungsform ist die mittlere Teilchengröße d₅₀ des Phosphinsäuresalzes (Komponente D) kleiner als 80 µm, vorzugsweise kleiner als 60 µm, weiter bevorzugt kleiner oder gleich 50 µm, und größer als 0,02 µm, bevorzugt größer als 1 µm und besonders bevorzugt größer als 5 µm, wobei die jeweiligen Ober- und Untergrenzen frei miteinander kombiniert werden können. In einer weiteren bevorzugten Ausführungsform ist d₅₀ zwischen 10 µm und 55 µm
Die mittlere Teilchengröße d₅₀ ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße d₅₀ unterscheiden.

Diese Anforderungen an die Teilchengröße sind jeweils mit dem technischen Effekt verbunden, dass die Flammschutzeffizienz des Phosphinsäuresalzes erhöht ist.

Das Phosphinsäuresalz kann entweder alleine oder in Kombination mit anderen phosphorhaltigen Flammschutzmitteln eingesetzt werden. Vorzugsweise sind die erfindungsgemäßen Zusammensetzungen frei von anderen phosphorhaltigen Flammschutzmitteln, insbesondere frei von phosphorhaltigen Flammschutzmitteln aus der Gruppe der organischen mono- und oligomeren Phosphor- und Phosphonsäureester, Phosphonatamine und Phosphazene.

### Komponente E

Die Komponente E umfasst ein oder mehrere thermoplastische Vinyl(Co)Polymerisate E.1.

Geeignet sind als Vinyl(Co)Polymerisate E.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
E.1.1 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
E.1.2 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate E.1 sind harzartig, thermoplastisch und kautschukfrei. Besonders bevorzugt ist das Copolymerisat aus E.1.1 Styrol und E.1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

### Komponente F

Die Zusammensetzung kann weitere handelsübliche Zusatzstoffe gemäß Komponente F) wie Flammschutzmittel, z.B. organische Phosphate, Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl-Sulfonate oder Polyamid-haltige Polymere), Säuren, Füll- und Verstärkungsstoffe (beispielsweise Glas- oder Karbonfasern, Glimmer, Kaolin, Talk, CaCO₃ und Glasschuppen) sowie Farbstoffe und Pigmente enthalten. Die fluorierten Polyolefine werden vorzugsweise in Form einer koagulierten Mischung von Emulsionen fluorierter Polyolefine mit Emulsionen eines Vinyl(Co)Polymerisats E.1, besonders bevorzugt mit Emulsionen eines Copolymerisats auf Styrol-Acrylnitril-Basis eingesetzt.

In einer besonders bevorzugten Ausführungsform ist die Zusammensetzung frei von weiteren Flammschutzmitteln.

Besonders bevorzugt werden als Zusatzstoffe Entformungsmittel, Stabilisatoren, Antidrippingmittel sowie Farbstoffe und Pigmente eingesetzt, wobei Kohlenstofffasern und Carbonanotubes keine Farbstoffe und Pigmente im Sinne der vorliegenden Erfindung darstellen.

### Herstellung und Prüfung der Formmassen

Die erfindungsgemäßen thermoplastischen Formmassen werden hergestellt, indem man die jeweiligen Bestandteile in bekannter Weise vermischt und bei Temperaturen von 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Außerdem können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

### Beispiele

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 15 kg/h bei einer Maschinentemperatur von 240°C (Vgl. 1 und 2 und Bsp. 1-2) bzw. 270°C (Bsp. 3-6) compoundiert und granuliert.

Die fertigen Granulate werden auf einer Spritzgussmaschine zu den entsprechenden Probekörpern verarbeitet (Massetemperatur 260°C, Werkzeugtemperatur 80°C, Fließfrontgeschwindigkeit 40 mm/s).

Zur Charakterisierung der Eigenschaften der Probekörper wurden folgende Methoden angewandt:

Die Kerbschlagzähigkeit wurde gemessen nach ISO 180/1A an einem einseitig angespritzten Prüfstab der Dimension 80x10x4 mm.

Die Wärmeformbeständigkeit wurde gemessen gemäß DIN ISO 306 (Vicat-Erweichungstemperatur, Verfahren B mit 50 N Belastung und einer Heizrate von 120 K/h) an einem einseitig angespritzten Prüfstab der Dimension 80x10x4 mm.

Das Brandverhalten und die Gesamtnachbrennzeit wird nach UL 94V an Stäben der Abmessung 127 x 12,7 x 1,5 mm gemessen.

Das Spannungsrissverhalten (ESC-Verhalten) wird an Stäben der Abmessung 80 x 10 x 4 mm untersucht. Das jeweils verwendete Testmedium ist in Tabelle 1 angegeben. Die Probekörper werden mittels einer Kreisbogenschablone vorgedehnt (Vordehnung εₓ x = 2,4 %) und bei Raumtemperatur im Testmedium gelagert. Das Spannungsrissverhalten wird über die Zeit bis zum Bruch ("BR") beurteilt.

### Komponente A:

Lineares Polycarbonat auf Basis Bisphenol A mit einer relativen Lösungsviskosität von ηᵣₑₗ = 1,282 ± 0,05 gemessen in CH₂Cl₂ als Lösungsmittel bei 25°C und einer Konzentration von 0,5 g/100 ml.

### Komponente B

Polymilchsäure mit einer spezifischen Dichte von 1.24g/cm³ und einer Schmelze-Masse-Fließrate von 5-7g/10min (bei 210°C/2.16 kg Belastung).

### Komponente C

### Komponente C-1

Schlagzähmodifikator, Pfropfpolymerisat von
C-1.1 10 Gew.-% Methylmethacrylat auf
C-1.2 90 Gew.-% eines Silikonacrylat-Komposit-Kautschukes als Pfropfgrundlage, wobei der Silikonacrylat-Kautschuk
   C-1.2.1 46 Gew.-% Silikonkautschuk und
   C-1.2.2 54 Gew.-% Polybutylacrylatkautschuk enthält, und
wobei sich die beiden genannten Kautschuk-Komponenten C-1.2.1 und C-1.2.2 im Komposit-Kautschuk gegenseitig durchdringen, so daß sie sich nicht wesentlich voneinander trennen lassen.

### Komponente C-2

Schlagzähmodifikator, Pfropfpolymerisat von
C-2.1 17 Gew.-% Methylmethacrylat auf
C-2.2 83 Gew.-% eines Silikonacrylat-Komposit-Kautschukes als Pfropfgrundlage, wobei der Silikonacrylat-Kautschuk
   C-2.2.1 11 Gew.-% Silikonkautschuk und
   C-2.2.2 89 Gew.-% Polybutylacrylatkautschuk enthält, und
wobei sich die beiden genannten Kautschuk-Komponenten C-2.2.1 und C-2.2.2 im Komposit-Kautschuk gegenseitig durchdringen, so daß sie sich nicht wesentlich voneinander trennen lassen.

### Komponente D

### Komponente D-1 (Vergleich)

### Bisphenol-A-basierendes Oligophosphat

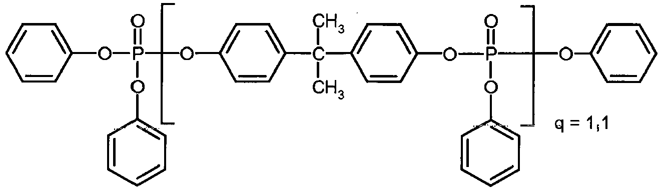

### Komponente D-2

Calciumphosphinat, mittlere Teilchengröße d₅₀= 50 µm.

### Komponente F

- Komponente F-1:: Polytetrafluorethylen-Pulver, CFP 6000 N, Fa. Du Pont.
- Komponente F-2:: Pentaerythrittetrastearat
- Komponente F-3:: Irganox® B900: Gemisch aus 80 Gew.-% Irgafos® 168 (Tris-(2,4-di-tert.-butyl)phenyl-phosphit) und 20 Gew.-% Irganox® 1076 (Octadecyl-3-(3,5-di-tert-butyl-4-hydroxyphenyl)propionat) (BASF, Deutschland)

Tabelle 1:

| | Vgl. 1 | **Bsp.1** | Vgl. 2 | **Bsp. 2** | **Bsp. 3** | **Bsp. 4** | **Bsp.** 5 | **Bsp. 6** |
|---|---|---|---|---|---|---|---|---|
| A | 69,3 | 69,3 | 59,3 | 59,3 | 54,3 | 64,3 | 64.3 | 71,8 |
| B | 15 | 15 | 20 | 20 | 25 | 20 | 15 | 15 |
| C-1 | 5 | 5 | 5 | 5 | | | | |
| C-2 | | | | | 5 | 5 | 5 | 5 |
| D-1 | 10 | | 15 | | | | | |
| D-2 | | 10 | | 15 | 15 | 10 | 15 | 7,5 |
| F-1 | 0,4 | 0,4 | 0,4 | 0,4 | 0,4 | 0,4 | 0,4 | 0,4 |
| F-2 | 0,2 | 0,2 | 0,2 | 0,2 | 0,2 | 0,2 | 0,2 | 0,2 |
| F-3 | 0,1 | 0,1 | 0,1 | 0,1 | 0,1 | 0,1 | 0,1 | 0,1 |
| Izod Kerbschlag (RT) [kJ/m²] | 18 | 45 | 12 | 14 | 14 | 46 | 29 | 54 |
| Vicat B120 [°C] | 106 | 141 | 90 | 136 | 132 | 136 | 139 | 140 |
| Brandverhalten UL 94V 1.5 mm | V1 | V0 | V0 | V0 | V0 | vo | V0 | V0 |
| Gesamtnachbrennzeit [S] | 122 | 35 | 50 | 29 | 29 | 57 | 20 | 57 |
| ESC Rapsöl 2,4%, Zeit bis Bruch [hh:mm] | 01:00 | 04:15 | 01:00 | 04:15 | 03:00 | 05:00 | 05:30 | 37:00 |

Aus Tabelle 1 ist ersichtlich, dass nur die erfindungsgemäßen Zusammensetzungen in den Beispielen 1 bis 6 mit einer Kombination aus Polycarbonat, Schlagzähmodifikator und Flammschutzmittel auf Phosphinatbasis (Calciumphosphinat) die erfindungsgemäße Aufgabe lösen, d.h. eine Kombination aus guter Performance im UL94V-Test mit geringer Gesamtnachbrennzeit bei gleichzeitig hoher Wärmeformbeständigkeit, Spannungsrißbeständigkeit und Kerbschlagzähigkeit aufweisen.

## Patentansprüche

1. Zusammensetzung enthaltend
A) 48 bis 90 Gew.-Teile, jeweils bezogen auf die Summe der Gewichtsteile der Komponenten A+B+C+D, aromatisches Polycarbonat,
B) 1 bis 40 Gew.-Teile, jeweils bezogen auf die Summe der Gewichtsteile der Komponenten A+B+C+D, Polymilchsäure,
C) 0,5 bis 15 Gew.-Teile, jeweils bezogen auf die Summe der Gewichtsteile der Komponenten A+B+C+D, Pfropfpolymerisat,
D) 2 bis 25 Gew.-Teile, jeweils bezogen auf die Summe der Gewichtsteile der Komponenten A+B+C+D, eines Salzes einer Phosphinsäure, und
E) 0 bis 10 Gew.-Teile, bezogen auf die Summe der Gewichtsteile der Komponenten A+B+C+D = 100) Vinyl(Co)Polymerisat,
wobei alle Gewichtsteilangaben in der vorliegenden Anmeldung so normiert sind, dass die Summe der Gewichtsteile der Komponenten A+B+C+D in der Zusammensetzung 100 ergeben.

2. Zusammensetzung gemäß Anspruch 1, enthaltend 15 bis 25 Gew.-Teile, jeweils bezogen auf die Summe der Gewichtsteile der Komponenten A+B+C+D, Polymilchsäure gemäß Komponente B).

3. Zusammensetzung gemäß Anspruch 1 oder 2, enthaltend 7,5 bis 15,0 Gew.-Teile (jeweils bezogen auf die Summe der Gewichtsteile der Komponenten A+B+C+D) eines Salzes einer Phosphinsäure gemäß Komponente D).

4. Zusammensetzung gemäß einem der Ansprüche 1 bis 3, enthaltend 0 bis 50 Gew.-Teile, jeweils bezogen auf die Summe der Gewichtsteile der Komponenten A+B+C+D = 100, Zusatzstoffe als Komponente F ausgewählt aus der Gruppe, die Flammschutzmittel, Flammschutzsynergisten, Antidrippingmittel, Gleit- und Entformungsmittel, Nukleiermittel, Stabilisatoren, Antistatika, Säuren, Füll- und Verstärkungsstoffe sowie Farbstoffe und Pigmente umfaßt.

5. Zusammensetzung gemäß einem der Ansprüche 1 bis 4, **dadurch gekennzeichnet, daß** die Polymilchsäure der Komponente B neben Milchsäure als Monomer mindestens ein weiteres Monomer enthält, ausgewählt aus der Gruppe, die Glycolsäure, Hydroxybuttersäure, Hydroxyvaleriansäure, Hydroxypentansäure, Hydroxycapronsäure und Hydroxyheptansäure umfaßt.

6. Zusammensetzung gemäß Anspruch 5, **dadurch gekennzeichnet, daß** der Anteil der Milchsäuremonomere mindestens 50 Gew.-% beträgt.

7. Zusammensetzung gemäß einem der Ansprüche 1 bis 6, **dadurch gekennzeichnet, daß** Komponente B eine Polymilchsäure mit einem Mw von 40.000 bis 120000 ist.

8. Zusammensetzung gemäß einem der Ansprüche 1 bis 7, enthaltend als Komponente C) ein oder mehrere Pfropfpolymerisate von
C.1 5 bis 95 Gew.-%, wenigstens eines Vinylmonomeren auf
C.2 95 bis 5 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylcetat-Kautschuke.

9. Zusammensetzung gemäß einem der Ansprüche 1 bis 8, wobei ein Salz oder eine Mischung von Salzen einer Phosphinsäure der Formel (IV) eingesetzt wird, 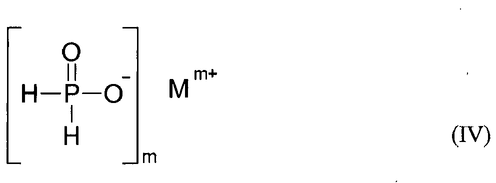 worin
M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine,ganze Zahl von 1 bis 6, bedeutet) des Periodensystems ist.

10. Zusammensetzung gemäß Anspruch 9 wobei M^{m+} = Ca²⁺ und m = 2 ist.

11. Zusammensetzung gemäß einem der Ansprüche 1 bis 10, wobei die mittlere Teilchengröße d₅₀ des Phosphinsäuresalzes (Komponente C) kleiner als 80 µm ist.

12. Verwendung der Zusammensetzungen gemäß Anspruch 1 bis 11 zur Herstellung von Formkörpern.

13. Formkörper, enthaltend eine Zusammensetzung nach einem der Ansprüche 1 bis 11.

## Claims

1. A composition containing
A) 48 to 90 parts by weight, based in each case on the sum of the parts by weight of components A+B+C+D, of aromatic polycarbonate,
B) 1 to 40 parts by weight, based in each case on the sum of the parts by weight of components A+B+C+D, of polylactic acid,
C) 0.5 to 15 parts by weight, based in each case on the sum of the parts by weight of components A+B+C+D, of graft polymer,
D) 2 to 25 parts by weight, based in each case on the sum of the parts by weight of components A+B+C+D, of a salt of a phosphinic acid, and
E) 0 to 10 parts by weight, based on the sum of the parts by weight of components A+B+C+D = 100, of vinyl (co)polymer,
all parts by weight data in the present application being standardised such that the sum of the parts by weight of components A+B+C+D in the composition adds up to 100.

2. The composition according to claim 1, containing 15 to 25 parts by weight, based in each case on the sum of the parts by weight of components A+B+C+D, of polylactic acid according to component B).

3. The composition according to claim 1 or 2, containing 7.5 to 15.0 parts by weight (based in each case on the sum of the parts by weight of components A+B+C+D) of a salt of a phosphinic acid according to component D).

4. The composition according to one of claims 1 to 3, containing 0 to 50 parts by weight, based in each case on the sum of the parts by weight of components A+B+C+D = 100, of additives as component F selected from the group comprising flame retardants, flame retardant synergists, anti-drip agents, lubricants and mould release agents, nucleating agents, stabilisers, antistatic agents, acids, fillers and reinforcing materials as well as dyes and pigments.

5. The composition according to one of claims 1 to 4, **characterised in that** the polylactic acid of component B contains, in addition to lactic acid as monomer, at least one further monomer selected from the group comprising glycolic acid, hydroxybutyric acid, hydroxyvaleric acid, hydroxypentanoic acid, hydroxycaproic acid and hydroxyheptanoic acid.

6. The composition according to claim 5, **characterised in that** the proportion of lactic acid monomers is at least 50 wt.%.

7. The composition according to one of claims 1 to 6, **characterised in that** component B is a polylactic acid with a Mw of 40,000 to 120,000.

8. The composition according to one of claims 1 to 7, containing as component C) one or more graft polymers of
C.1 5 to 95 wt.% of at least one vinyl monomer on
C.2 95 to 5 wt.% of at least one backbone selected from the group consisting of diene rubbers, EP(D)M rubbers (i.e. those based on ethylene/propylene and optionally diene), acrylate, polyurethane, silicone, silicone acrylate, chloroprene and ethylene/vinyl acetate rubbers.

9. The composition according to one of claims 1 to 8, wherein a salt or a mixture of salts of a phosphinic acid of formula (IV) is used, 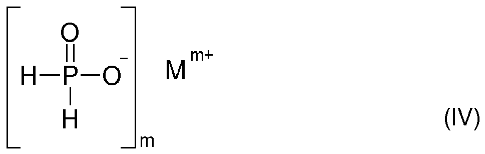 where
M^{m+} is a metal cation of the 1st main group (alkali metals; m = 1), 2nd main group (alkaline earth metals; m = 2) or 3rd main group (m = 3) or of the 2nd, 7th or 8th subgroup (wherein m signifies an integer from 1 to 6) of the periodic table.

10. The composition according to claim 9 wherein M^{m+} = Ca²⁺ and m = 2.

11. The composition according to one of claims 1 to 10, wherein the average particle size d₅₀ of the phosphinic acid salt (component C) is less than 80 µm.

12. Use of the compositions according to claims 1 to 11 for the production of mouldings.

13. Mouldings containing a composition according to one of claims 1 to 11.

## Revendications

1. Composition contenant
A) 48 à 90 parties en poids, à chaque fois par rapport à la somme des parties en poids des composants A + B + C + D, de polycarbonate aromatique,
B) 1 à 40 parties en poids, à chaque fois par rapport à la somme des parties en poids des composants A + B + C + D, de poly(acide lactique),
C) 0,5 à 15 parties en poids, à chaque fois par rapport à la somme des parties en poids des composants A + B + C + D, de polymère greffé,
D) 2 à 25 parties en poids, à chaque fois par rapport à la somme des parties en poids des composants A + B + C + D, d'un sel d'un acide phosphinique, et
E) 0 à 10 parties en poids, par rapport à la somme des parties en poids des composants A + B + C + D = 100, de (co)polymère de vinyle,
toutes les indications de parties en poids dans la présente demande étant normalisées de manière telle que la somme des parties en poids des composants A + B + C + D dans la composition vaut 100.

2. Composition selon la revendication 1, contenant 15 à 25 parties en poids, à chaque fois par rapport à la somme des parties en poids des composants A + B + C + D, de poly(acide lactique) selon le composant B).

3. Composition selon la revendication 1 ou 2, contenant 7,5 à 15,0 parties en poids (à chaque fois par rapport à la somme des parties en poids des composants A + B + C + D) d'un sel d'un acide phosphinique selon le composant D).

4. Composition selon l'une quelconque des revendications 1 à 3, contenant 0 à 50 parties en poids, à chaque fois par rapport à la somme des parties en poids des composants A + B + C + D = 100, d'additifs comme composant F, choisis dans le groupe constitué par les agents ignifuges, les synergistes d'agents ignifuges, les agents antigoutte, les lubrifiants et les agents de démoulage, les agents de nucléation, les stabilisants, les antistatiques, les acides, les charges et les substances de renforcement ainsi que les colorants et les pigments.

5. Composition selon l'une quelconque des revendications 1 à 4, **caractérisée en ce que** le poly(acide lactique) du composant B contient, outre l'acide lactique comme monomère, au moins un autre monomère choisi dans le groupe comprenant l'acide glycolique, l'acide hydroxybutyrique, l'acide hydroxyvalérianique, l'acide hydroxypentanoïque, l'acide hydroxycaproïque et l'acide hydroxyheptanoïque.

6. Composition selon la revendication 5, **caractérisée en ce que** la proportion de monomères d'acide lactique est d'au moins 50% en poids.

7. Composition selon l'une quelconque des revendications 1 à 6, **caractérisée en ce que** le composant B est un poly(acide lactique) présentant un M_{w} de 40 000 à 120 000.

8. Composition selon l'une quelconque des revendications 1 à 7, contenant, comme composant C), un ou plusieurs polymères greffés de
C.1 5 à 95% en poids d'au moins un monomère de vinyle sur
C.2 95 à 5% en poids d'au moins une base de greffage choisie dans le groupe constitué par les caoutchoucs de diène, les caoutchoucs d'EP(D)M (c'est-à-dire ceux à base d'éthylène/propylène et le cas échéant de diène), les caoutchoucs d'acrylate, de polyuréthane, de silicone, de silicone-acrylate, de chloroprène et d'éthylène/acétate de vinyle.

9. Composition selon l'une quelconque des revendications 1 à 8, un sel ou un mélange de sels d'un acide phosphinique de formule (IV) étant utilisé, 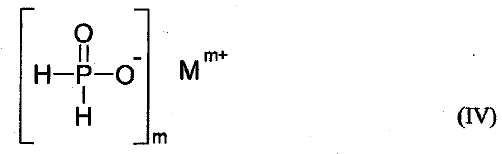 où
M^{m+} représente un cation métallique du 1 er groupe principal (métaux alcalins : m = 1), du 2ème groupe principal (métaux alcalino-terreux : m = 2) ou du 3ème groupe principal (m = 3) ou du 2ème, 7ème ou 8ème groupe secondaire (m signifiant un nombre entier de 1 à 6) du système périodique.

10. Composition selon la revendication 9, M^{m+} = Ca²⁺ et m = 2.

11. Composition selon l'une quelconque des revendications 1 à 10, la grosseur moyenne des particules d₅₀ du sel de l'acide phosphinique (composant C) étant inférieure à 80 µm.

12. Utilisation des compositions selon la revendication 1 à 11 pour la production de corps moulés.

13. Corps moulé contenant une composition selon l'une quelconque des revendications 1 à 11.
